# EUROPEAN PATENT APPLICATION

(11) **EP 4 458 867 A1**
(43) Date of publication of application: **06.11.2024**
(21) Application number: 22916039.5
(22) Date of filing: 26.12.2022
(51) Int. Cl.: C08F 2/38, C08F 36/18

(54) **METHOD FOR PRODUCING EMULSION**

(30) Priority: 28.12.2021 JP 2021214838
(71) Applicant: Resonac Corporation, Tokyo 105-7325 (JP)
(72) Inventor: IWASAKI Fumihiko, Tokyo 105-8518 (JP); AOKI Hidemasa, Tokyo 105-8518 (JP); SHIBUYA Akira, Tokyo 105-8518 (JP)
(74) Representative: Strehl Schübel-Hopf & Partner
(86) International application number: PCT/JP2022/047972
(87) International publication number: WO 2023/127816

(57) **Abstract**

Provided is a method for producing an emulsion in which the load is small in terms of the process and the environment, the physical properties of a polymer product do not change, and the polymer product can be stably stored for a long period of time. A method for producing an emulsion by emulsion polymerization of a monomer in the presence of a solvent and an emulsifier, the method having
a polymerization step and a polymerization termination step,
in which a reaction terminator having an aromatic ring and having a particle diameter (d50) of 200 um or less is added in the polymerization termination step.

## Description

### Technical Field

The present invention relates to a method for producing an emulsion.

### Background Art

In a polymerization reaction, it is common to control the rate of polymerization conversion of a monomer to impart a characteristic physical property to a polymer. A reaction terminator is often added in the final stage of the polymerization reaction for the purpose of controlling the rate of polymerization conversion of the monomer and stabilizing the physical properties of the polymer. A number of methods for adding a reaction terminator have been reported, but there is a limit on processes that can be used in emulsion polymerization in which polymerization is performed in water using a dispersant and a surfactant.

For example, Patent Literature 1 describes a common method for adding a reaction terminator on the occasion of emulsion polymerization of chloroprene in an example. In Patent Literature 1, a reaction terminator is emulsified using a chloroprene monomer as a solvent in the presence of an emulsifier and water and added.

In addition, Patent Literature 2 describes that a reaction can also be terminated by adding, for example, phenothiazine, t-butylpyrocatechol or diethylhydroxylamine.

In addition, Patent Literature 3 also discloses the use of a reaction terminator complex obtained by complexing a polymerization inhibitor and a wax-form organic substance to enhance storage stability.

Furthermore, in Patent Literature 4, the present applicant has proposed emulsion radical polymerization of chloroprene in which the particle diameter of a polymer is decreased by controlling the amount of an emulsifier and the molecular weight is optimized by controlling the amount of a chain transfer agent.

### Citation List

### Patent Literature

Patent Literature 1: JP2018-145321A
Patent Literature 2: JP2009-293048A
Patent Literature 3: JP2004-256765A
Patent Literature 4: JP2021-001297A

### Summary of Invention

### Technical Problem

However, in Patent Literature 1, since the operation procedure increases and an organic solvent is essentially used, there is a problem in that load is applied to an operator or the environment.

In Patent Literature 2, the physical properties of a polymer change over time, the gel content increases as time goes by, and it is difficult to maintain the physical properties constant for a long period of time.

Furthermore, Patent Literature 3 is not about the formation of an emulsion but about liquid-phase polymerization in which a radical polymerizable monomer having a dicyclopentadienyl structure is used, and does not suggest the emulsion polymerization.

In addition, in Patent Literature 4, attention is paid to the heat resistance or initial adhesive power of an adhesive containing chloroprene polymer latex, and regarding a method for adding a reaction terminator, only the addition of an emulsion is described, but not studied in detail.

Therefore, an object of the present invention is to provide a method for producing an emulsion and a reaction termination method which can be used even in an emulsion polymerization system and in which an organic solvent is not used, the load on an operator or the environment is small, steps are simple, the operation load is small, the physical properties of a polymer product do not change, and the polymer product can be stably stored for a long period of time.

### Solution to Problem

As a result of intensive studies for achieving the above-described object, the present inventors found that, when a polymerization reaction in an emulsion polymerization system is terminated using a reaction terminator having an aromatic ring and having a particle diameter (a particle diameter at which the volume cumulative frequency reaches 50%, hereinafter also referred to as "d50") of 200 um or less, the above-described problems are solved, it is possible to save the process and reduce the use of a hazardous substance, and an environment-friendly process can be provided and completed the present invention.

The configuration of the present invention is as follows:
[1] A method for producing an emulsion by emulsion polymerization of a monomer in the presence of a solvent and an emulsifier, the method comprising:
   a polymerization step and a polymerization termination step,
   wherein a reaction terminator having an aromatic ring and having a particle diameter (d50) of 200 um or less is added in the polymerization termination step.
[2] The method for producing an emulsion according to [1], wherein the reaction terminator comprises at least one of phenothiazine or 2,5-di-t-butylhydroquinone.
[3] The method for producing an emulsion according to [1] or [2], wherein the monomer comprises chloroprene.
[4] The method for producing an emulsion according to [3], wherein the monomer comprises 2,3-dichloro-1,3-butadiene.
[5] The method for producing an emulsion according to any one of [1] to [4], wherein a rate of polymerization conversion of the monomer is 60% or more and 99% or less.
[6] The method for producing an emulsion according to any one of [1] to [5], wherein a solid content concentration of the emulsion at the end of the polymerization step is 5 mass% or more and 70 mass% or less.
[7] The method for producing an emulsion according to any one of [1] to [6], wherein a pH of a reaction liquid in the polymerization step is 7.1 or higher and 14.0 or lower.
[8] The method for producing an emulsion according to any one of [1] to [7], wherein a temperature in the polymerization step is 20°C or higher and 80°C or lower.
[9] The method for producing an emulsion according to any one of [1] to [8], wherein a pH after the end of the polymerization termination step is 8.0 or higher and 14.0 or lower.
[10] The method for producing an emulsion according to any one of [1] to [9], wherein a solid content of the emulsion after the end of the polymerization termination step is 35 mass% or more and 70 mass% or less.
[11] The method for producing an emulsion according to any one of [1] to [10], wherein the particle diameter (d50) of the reaction terminator is 10 um or more.
[12] An emulsion, obtained by dispersion and emulsion polymerization of a monomer in a solvent, and subsequent termination of a reaction with a reaction terminator having an aromatic ring and having a particle diameter (d50) of 200 um or less.
[13] The emulsion according to [12], wherein Mw of a polymer in the emulsion is 100000 to 1000000.
[14] The emulsion according to [12] or [13], wherein the particle diameter (d50) of the reaction terminator is 10 um or more.
[15] A method for terminating emulsion polymerization, wherein, after emulsion polymerization of a monomer that is performed in the presence of a solvent and an emulsifier, a reaction terminator having an aromatic ring and having a particle diameter (d50) of 200 um or less is added.

### Advantageous Effects of Invention

The present invention provides a reaction termination method in which the operation load or the environmental load is small at the time of emulsion polymerization, and according to the production method of the present invention, it is possible to perform the control of the physical properties of a polymer safely and economically and to stably store the polymer.

### Description of Embodiments

Hereinafter, the present embodiment will be specifically described.

### [Method for Producing Emulsion]

A method for producing an emulsion in the present invention, by emulsion polymerization of a monomer in the presence of a solvent and an emulsifier,
the method having a polymerization step and a polymerization termination step,
in which a reaction terminator having an aromatic ring and having a particle diameter (d50) of 200 um or less is added in the polymerization termination step.

### [Polymerization Step]

The polymerization step of the present embodiment is a step of obtaining an emulsion by emulsion polymerization of a monomer.

The emulsion polymerization is a method in which an emulsion is formed from a monomer that is immiscible with solvents and a solvent in the presence of an emulsifier as necessary and the monomer in the emulsion is polymerized.

The emulsion refers to a substance containing a polymer that is derived from the monomer as a dispersoid dispersed in a dispersion medium (the solvent). The monomer is not particularly limited and examples thereof include chloroprene, styrene, butadiene, acrylonitrile, 2,3-dichloro-1,3-butadiene, chloroprene, isoprene and vinyl acetate.

Among these, in the present aspect, chloroprene is preferably included as the monomer, and chloroprene is included within a range of more preferably 40 mass% or more and still more preferably 90 to 100 mass% in the entire monomer. The chloroprene refers to 2-chloro-1,3-butadiene.

One kind of monomer may be used or a plurality of kinds of monomers may be combined together. Between them, in the present aspect, it is preferable that chloroprene is singly used as the monomer, or chloroprene and a monomer copolymerizable with chloroprene are included.

At the end of the polymerization step, the solid content concentration of the emulsion is preferably 5 mass% or more and 70 mass% or less, more preferably 30 mass% or more and 65 mass% or less, still more preferably 40 mass% or more and 65 mass% or less and far still more preferably 45 mass% or more and 60 mass% or less from the viewpoint of the amount of an active component per unit volume.

Examples of the monomer copolymerizable with chloroprene include 2,3-dichloro-1,3-butadiene, 1-chloro-1,3-butadiene, butadiene, isoprene, styrene, methacrylic acid, acrylic acid, itaconic acid, 2-methyl-2-pentenoic acid and 2-butylpropenoic acid. Among these, 2,3-dichloro-1,3-butadiene is preferably included as the monomer copolymerizable with chloroprene from the viewpoint of the reactivity. The amount of the monomer copolymerizable with chloroprene used is within a range of preferably 60 mass% or less and more preferably 0 to 10 mass% in the entire monomer.

The solvent in the polymerization step is not particularly limited, but a solvent that is immiscible with monomers is used in the case of emulsion polymerization, and water is normally used in a case where the monomer includes chloroprene.

The amount of the solvent used in the polymerization step is preferably 25 mass% or more and 95 mass% or less, more preferably 30 mass% or more and 60 mass% or less and still more preferably 35 mass% or more and 50 mass% or less of the total mass of a polymerization liquid containing the monomer or an additive, which will be described below, and the solvent. Within this range, it is possible to stably control the emulsion polymerization.

In the polymerization step, it is preferable to use an additive such as a polymerization initiator, an emulsifier, a chain transfer agent or a stabilizer as appropriate to an extent that the object of the present invention is not impaired.

The polymerization initiator is not particularly limited, and it is possible to use a common radical polymerization initiator. Particularly, in the case of emulsion polymerization, an organic or inorganic peroxide such as benzoyl peroxide, potassium persulfate or and ammonium persulfate or an azo compound such as azobisisobutyronitrile is preferable. It is also possible to jointly use a cocatalyst such as anthraquinone sulfonate, potassium sulfite or sodium sulfite. Two or more kinds of radical polymerization initiators or co-catalysts may be combined together, respectively. The amount of the polymerization initiator is preferably 0.005 parts by mass or more and 0.3 parts by mass or less, more preferably 0.008 parts by mass or more and 0.2 parts by mass or less and still more preferably 0.01 parts by mass or more and 0.1 parts by mass or less with respect to 100 parts by mass of the amount of the entire monomer prepared.

The emulsifier is not particularly limited, and examples thereof include rosin acid soaps (such as potassium rosin acid and sodium rosin acid) and dodecylbenzene sulfonate. In the case of using a monomer including chloroprene, the amount of potassium rosin acid is preferably 0.1 parts by mass or more and 5 parts by mass or less, more preferably 0.5 parts by mass or more and 4 parts by mass or less and still more preferably 1 part by mass or more and 3 parts by mass or less with respect to 100 parts by mass of the amount of the entire monomer prepared. Within this range, it is possible to make latex present stably.

The chain transfer agent is used to adjust the molecular weight or the molecular weight distribution, and examples thereof include alkyl mercaptans such as xanthogen disulfide and n-dodecyl mercaptan. In the case of using n-dodecyl mercaptan, the amount of the chain transfer agent used is preferably 0.03 parts by mass or more and 0.2 parts by mass or less, more preferably 0.04 parts by mass or more and 0.15 parts by mass or less and still more preferably 0.05 parts by mass or more and 0.13 parts by mass or less with respect to 100 parts by mass of the amount of the entire monomer prepared.

The temperature in the polymerization step (hereinafter, also referred to as "polymerization temperature") is preferably 20°C or higher and 80°C or lower, more preferably 30°C or higher and 60°C or lower and still more preferably 35°C or higher and 45°C or lower. At a polymerization temperature of 20°C or higher, the productivity of an emulsion is high, which is preferable. When the polymerization temperature is 80°C or lower, the vapor pressure of the monomer is not too high, the polymerization operation is easy, and the mechanical characteristics, such as tensile strength, of a polymer to be obtained is sufficient, which are preferable.

The pH at 23°C of a reaction liquid containing the monomer dispersed in the solvent in the polymerization step is preferably 7.1 or higher and 14.0 or lower, more preferably 8.0 or higher and 14.0 or lower and still more preferably 12.0 or higher and 14.0 or lower. When the pH is made to be within the above-described range, it is possible to produce an emulsion that is in a stable emulsified state and does not easily aggregate.

The pH can be adjusted using a base, an acid or an amino acid. Examples of the base include aqueous solutions of an amine such as diethanolamine or triethanolamine and a metal hydroxide such as potassium hydroxide or sodium hydroxide. Examples of the acid include inorganic acids such as hydrochloric acid, sulfuric acid, phosphoric acid and boric acid and organic acids such as acetic acid and citric acid. Examples of the amino acid include glycine and alanine.

### [Polymerization Termination Step]

The polymerization termination step is a step of terminating the polymerization of the emulsion that has undergone the polymerization step using a reaction terminator.

The reaction terminator has an aromatic ring, and examples thereof include phenothiazines, quinones, hydroquinones such as 2,5-di-t-butylhydroquinone, catechols and phenols. Specific examples thereof include phenothiazine, 4-t-butylcatechol, hydroquinone, hydroquinone monomethyl ether, diethylhydroxylamine and 2,5-di-t-butylhydroquinone. Among these, the reaction terminator preferably includes at least one of phenothiazine or 2,5-di-t-butylhydroquinone.

It has been normal to add a reaction terminator in such as solution or emulsion form, but the reaction terminator that is used in the present aspect is a powder and has a particle diameter (d50) of 200 um or less, preferably 150 um or less and more preferably 120 um or less. The particle diameter (d50) is preferably 1 um or more, more preferably 10 um or more and still more preferably 30 um or more. When the particle diameter (d50) is within the above-described range, it is possible to simplify a production facility.

A method for adjusting the particle diameter of the reaction terminator is not limited, and a desired particle diameter can be adjusted using a reaction terminator granulated to a predetermined particle diameter or by grinding a granulated reaction terminator with a mortar for example. This makes it possible to save the process and reduce the use of a hazardous substance, such as an organic solvent, and the process becomes environment-friendly.

In the polymerization termination step, the reaction terminator is charged into the polymerization liquid when the rate of polymerization conversion of the emulsion is in a desired range.

The rate of polymerization conversion is selected as appropriate depending on the object and is, normally, preferably 60% or higher and 99% or lower, more preferably 70% or higher and 98% or lower and still more preferably 80% or higher and 97% or lower. Within this range, an emulsion can be obtained at a low cost.

When the rate of polymerization conversion is within the above-described range, the solid content of polymer latex increases, the amount of a residual monomer becomes small, an odor attributed to the monomer is less likely to be generated, and an emulsion having a high storage stability, the polymer having a less chain-branched structure and having a narrow molecular weight distribution can be obtained.

After the charging of the reaction terminator, a monomer removal step such as distillation or filtration may be provided.

The pH at 23°C of the emulsion after the end of the polymerization termination step is preferably 8.0 or higher and 14.0 or lower. Within this range of pH, the emulsion has a high storage stability after polymerization.

The solid content concentration of the emulsion after the end of the polymerization termination step is preferably 35 mass% or more and 70 mass% or less, more preferably 40 mass% or more and 65 mass% or less and still more preferably 45 mass% or more and 60 mass% or less. When the solid content concentration is set to 35 mass% or more, an emulsion having a high concentration per unit volume can be obtained, and it is possible to achieve the shortening of the drying time and the reduction of a load on a drying machine. In addition, when the solid content concentration is set to 70 mass% or less, the emulsion having an appropriate fluidity can be obtained.

The volume-average particle diameter of the emulsion is preferably 50 to 300 nm. The volume-average particle diameter of the emulsion is more preferably 80 to 250 nm and still more preferably 100 to 220 nm. Within this range of the diameter, an emulsion has excellent stability.

In the case of using a monomer including chloroprene, the tetrahydrofuran (THF) insoluble content of the polymer that is contained in the obtained emulsion is preferably 20 mass% or more and 95 mass% or less, more preferably 30 mass% or more and 92 mass% or less and still more preferably 40 mass% or more and 90 mass% or less.

When the tetrahydrofuran insoluble content is within the above-described range, it is possible to obtain a molded article having small stress relaxation necessary for a molded article such as gloves, and a molded article having excellent flexibility and tensile strength is obtained. The tetrahydrofuran insoluble content can be controlled by adjusting the degree of the rate of polymerization conversion. The rate of polymerization conversion is controlled with the polymerization time and the polymerization temperature. The rate of polymerization conversion tends to become larger as the polymerization time becomes longer, the rate of polymerization conversion tends to become larger as the polymerization temperature becomes higher. The tetrahydrofuran insoluble content in the polymer tends to become larger as the rate of polymerization conversion becomes larger.

The present invention can provide a step of removing an unreacted monomer or a volatile component after the polymerization termination step.

( 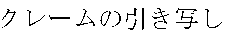 )
In another aspect of the present invention, provided is an emulsion obtained by dispersion and emulsion polymerization of a monomer in a solvent, and subsequent termination of a reaction with a reaction terminator having an aromatic ring and having a particle diameter (d50) of 200 um or less. The weight-average molecular weight (hereinafter, also referred to as "Mw") of a polymer in the emulsion is preferably within a range of 100000 to 1000000 and preferably 300000 to 900000. When the emulsion containing the polymer having a molecular weight within this range is used as an adhesive, it can exhibit a favorable heat resistance and favorable initial adhesive power.

The average molecular weight can be adjusted with the amount of the chain transfer agent added, and a chloroprene polymer having a lower molecular weight can be obtained as the amount of the chain transfer agent added becomes larger.

The particle diameter (d50) of the reaction terminator is preferably 10 um or more as described above.

Furthermore, in another aspect of the present invention, provided is a method for terminating emulsion polymerization, in which a reaction terminator having an aromatic ring and having a particle diameter (d50) of 200 um or less is added to emulsion polymerization of a monomer that is performed in the presence of a solvent and an emulsifier. Such a method for terminating emulsion polymerization can be applied to known emulsion polymerization and can be preferably applied to emulsion polymerization where water is used as a solvent. Furthermore, the method can be preferably applied to emulsion polymerization where chloroprene is included as a monomer.

### Examples

Hereinafter, the present invention will be more specifically described using examples, but the present invention is not limited only to the following examples.

### Polymerization Step and Polymerization Termination Step

### (Example 1)

1.7 kg of chloroprene, 1.0 kg of pure water, 10 g of rosin acid, 0.1 g of n-dodecyl mercaptan, 10 g of potassium hydroxide, 5 g of a formalin condensate of sodium naphthalenesulfonate and 0.5 g of sodium dodecylbenzenesulfonate were mixed, stirred and thereby emulsified. The pH at this time was 13.0.

The liquid temperature was set to 45°C, an aqueous solution containing potassium persulfate was added as an initiator, and polymerization was performed at 45°C. The emulsion polymerization was advanced until the rate of polymerization conversion reached 85%, and the emulsion polymerization was then terminated by adding 0.3 g of a phenothiazine powder having a particle diameter of 200 um or less and 0.4 g of 4-t-butylcatechol (85 mass% aqueous solution) as a reaction terminator. A part of the obtained emulsion was separated without steam stripping, and a change in the solid content concentration when the emulsion was left to stand at 23°C for seven days for storage is shown in Table 2.

An unreacted chloroprene monomer was removed from the rest emulsion by steam stripping under reduced pressure. The solid content concentration, pH, tetrahydrofuran insoluble content and particle diameter of the obtained emulsion are shown in Table 1.

### (Comparative Example 1)

An emulsion was obtained in the same manner as in Example 1 except that, as a reaction terminator, phenothiazine having a particle diameter of more than 200 um and 4-t-butylcatechol (85 mass% aqueous solution) were added in a form of a suspension containing toluene, pure water and an emulsifier and having a solid content concentration of 6 mass% so that the same weight as in Example 1 was reached.

### (Comparative Example 2)

An emulsion was obtained in the same manner as in Example 1 except that no reaction terminators were added.

### (Example 2)

1.5 kg of chloroprene, 150 g of 2,3-dichloro-1,3-butadiene, 1.4 kg of pure water, 50 g of rosin acid, 0.1 g of n-dodecyl mercaptan, 10 g of potassium hydroxide and 1 g of a formalin condensate of sodium naphthalenesulfonate were mixed, stirred and thereby emulsified. The pH at this time was 13.0. The liquid temperature was set to 40°C, an aqueous solution containing potassium persulfate was added as an initiator, and polymerization was performed at 40°C. The emulsion polymerization was performed by adding an initiator until the rate of polymerization conversion reached 85%, and the emulsion polymerization was then terminated by adding 0.3 g of a phenothiazine powder having a particle diameter of 200 um or less and 0.4 g of 4-t-butylcatechol (85 mass% aqueous solution) as a reaction terminator. A part of the obtained emulsion was separated without steam stripping, and a change in the solid content concentration when the emulsion was left to stand at 23°C for seven days for storage is shown in Table 2. Steam stripping was performed in the same manner as in Example 1, thereby obtaining an emulsion.

### (Comparative Example 3)

An emulsion was obtained in the same manner as in Example 2 except that, as a reaction terminator, the same phenothiazine and 4-t-butylcatechol (85 mass% aqueous solution) as in Comparative Example 1 were added in a form of a suspension containing toluene, pure water and an emulsifier.

### (Comparative Example 4)

An emulsion was obtained in the same manner as in Example 2 except that no reaction terminators were added.

### (Measurement of Tetrahydrofuran Insoluble Content)

The emulsion was dissolved in tetrahydrofuran such that the concentration reached 0.5% in terms of the mass, continuously shaken for 12 hours and then centrifuged, thereby separating an insoluble component. The supernatant was collected on an aluminum Petri dish, and the tetrahydrofuran insoluble content was calculated from the mass of the residue on the aluminum Petri dish after the solvent was volatilized in a steam bath at 100°C for 20 minutes. Tetrahydrofuran insoluble content (%) = (mass after volatilization - mass before volatilization) ÷ mass before volatilization × 100 (%)

### (Measurement of Rate of Polymerization Conversion)

The emulsion was thermally treated (at 141°C for 30 minutes) and thereby dried to leave only the solid content, and the solid content concentration (S) was calculated from the mass before drying and the mass after drying. The solid content concentration (theoretical value) in a case where the polymerization reaction has advanced 100% is theoretically calculated, and this theoretical value is defined as T₁₀₀. The solid content concentration (theoretical value) when the polymerization reaction has advanced 0% is theoretically calculated, and this theoretical value is defined as T₀.

In addition, the rate of polymerization conversion is calculated from the following equation. Rate of polymerization conversion (%) = (S - T0)/(T100 - T0) × 100

### (Measurement of Solid Content Concentration)

Solid content concentration (S) = (mass (g) before drying - mass (g) after drying) ÷ mass (g) before drying

Upon drying, the emulsion was dried by being left to stand in an oven at 141°C for 30 minutes. The obtained emulsion was preserved for seven days, the solid content concentration was measured every day, and a change after the seven-day preservation was obtained.

### (Particle Diameter of Emulsion)

For the volume-average particle diameter of the emulsion (also simply referred to as the particle diameter of the emulsion in some cases), a solution obtained by diluting the emulsion 1000 to 10000 times with pure water was measured using, for example, a dynamic light scattering photometer (ZETASIZER (registered trademark) Nano-S manufactured by Malvern Panalytical Ltd.).

### (pH)

The pH was measured at a temperature of 20°C using a pH meter (pH71-11JAA) manufactured by Yokogawa Electric Corporation.

### (Particle Diameter)

The particle diameter of the reaction terminator was measured as follows. The reaction terminator was shaken (160 times/minute) for five minutes with vibrating sieves having an opening of 32 um, 53 um, 75 um, 88 um, 106 um, 180 um or 320 um, the percentages (mass%) of the remaining amounts on the sieves were calculated, and a point where the cumulative frequency reached 50% (d50) was obtained.

The results are shown in Table 1 and Table 2.

### [Table 1]

**Table 1**

| | Solid content [%] | PH[-] | Tetrahydrofuran insoluble content [%] | Particle diameter of polymer emulsion [nm] |
|---|---|---|---|---|
| Example 1 | 58.2 | 13.1 | 88.8 | 189 |
| Comparative Example 1 | 58.6 | 13.1 | 88.1 | 185 |
| Example 2 | 48.7 | 13.1 | 50.3 | 126 |
| Comparative Example 3 | 48.4 | 13.1 | 46.5 | 129 |

The particle diameters of the emulsions of Comparative Examples 2 and 4 are not applicable since no reaction terminators were added.

### [Table 2]

**Table 2**

| | Number of elapsed days | | | | | | |
|---|---|---|---|---|---|---|---|
| | 0 day | 1 day | 2 days | 5 days | 6 days | 7 days | Change Δ_{7day-0day} |
| Example 1 | 57.63 | 57.43 | 57.44 | 57.67 | 57.58 | 57.74 | 0.11 |
| Comparative Example 1 | 56.47 | 56.31 | 56.39 | 56.51 | 56.48 | 56.63 | 0.16 |
| Comparative Example 2 | 58.10 | 58.86 | 58.95 | - | 59.05 | 59.13 | 1.03 |
| Example 2 | 48.01 | 48.11 | 48.34 | 48.33 | 48.39 | 48.38 | 0.37 |
| Comparative Example 3 | 46.14 | 46.31 | 46.49 | 46.53 | 46.55 | 46.60 | 0.46 |
| Comparative Example 4 | | | | | | | |

The data of Comparative Example 4 is not applicable.

In all of the examples and the comparative examples, the changes in the solid content percentage of the emulsion were 1.03 or less even after the seven-day preservation, which are minor. Among these, the changes were particularly minor in Example 1 and Comparative Example 1.

The particle size distributions of the reaction terminators used in Examples 1 and 2 are shown in Table 3, and the particle size distributions of the reaction terminators used in Comparative Examples 1 and 3 are shown in Table 4.

### [Table 3]

**Table 3**

| Opening [µm] | Mass [g] | Proportion (%) | Cumulative frequency (%) |
|---|---|---|---|
| 300 | 0.1166 | 13.677 | 100.000 |
| 180 | 0.1824 | 21.396 | 86.323 |
| 106 | 0.1569 | 18.405 | 64.927 |
| 88 | 0.0580 | 6.804 | 46.522 |
| 75 | 0.0594 | 6.968 | 39.718 |
| 53 | 0.0640 | 7.507 | 32.751 |
| 32 | 0.1748 | 20.504 | 25.243 |
| 0 | 0.0404 | 4.739 | 4.739 |

### [Table 4]

**Table 4**

| Opening[µm] | Mass [g] | Proportion (%) | Cumulative frequency (%) |
|---|---|---|---|
| 300 | 0.7743 | 99.473 | 100.000 |
| 180 | 0.0010 | 0.128 | 0.527 |
| 106 | 0.0017 | 0.218 | 0.398 |
| 88 | 0.0003 | 0.039 | 0.180 |
| 75 | 0.0005 | 0.064 | 0.141 |
| 53 | 0.0001 | 0.013 | 0.077 |
| 32 | 0.0005 | 0.064 | 0.064 |
| 0 | 0.0000 | 0.000 | 0.000 |

From Table 3, it is found that the reaction terminators used in Examples 1 and 2 had d50 of 88 to 106 um and the reaction terminators used in Comparative Examples 1 and 3 had d50 of 300 um or more.

Compared with the emulsions of Comparative Examples 1 and 3 where an organic solvent was used as the dispersion medium for the reaction terminator, as the emulsions of Examples 1 and 2, emulsions having the same latex physical properties, such as the solid content percentage and the storage stability of the solid content percentage, were obtained.

Therefore, it is possible to produce emulsions as before+ using a reaction terminator having a particle diameter of less than 200 um without being suspended such as in an organic solvent, which is a reaction termination method having a small operation load or environmental load, and it becomes possible to safely and economically perform the control of the physical properties of a polymer to be produced and the stable storage of the polymer.

## Claims

1. A method for producing an emulsion by emulsion polymerization of a monomer in the presence of a solvent and an emulsifier, the method comprising:
a polymerization step and a polymerization termination step,
wherein a reaction terminator having an aromatic ring and having a particle diameter (d50) of 200 um or less is added in the polymerization termination step.

2. The method for producing an emulsion according to claim 1, wherein the reaction terminator comprises at least one of phenothiazine or 2,5-di-t-butylhydroquinone.

3. The method for producing an emulsion according to claim 1 or 2, wherein the monomer comprises chloroprene.

4. The method for producing an emulsion according to claim 3, wherein the monomer comprises 2,3-dichloro-1,3-butadiene.

5. The method for producing an emulsion according to claim 1, wherein a rate of polymerization conversion of the monomer is 60% or more and 99% or less.

6. The method for producing an emulsion according to claim 1, wherein a solid content concentration of the emulsion at the end of the polymerization step is 5 mass% or more and 70 mass% or less.

7. The method for producing an emulsion according to claim 1, wherein a pH of a reaction liquid in the polymerization step is 7.1 or higher and 14.0 or lower.

8. The method for producing an emulsion according to claim 1, wherein a temperature in the polymerization step is 20°C or higher and 80°C or lower.

9. The method for producing an emulsion according to claim 1, wherein a pH after the end of the polymerization termination step is 8.0 or higher and 14.0 or lower.

10. The method for producing an emulsion according to claim 1, wherein a solid content of the emulsion after the end of the polymerization termination step is 35 mass% or more and 70 mass% or less.

11. The method for producing an emulsion according to claim 1, wherein the particle diameter (d50) of the reaction terminator is 10 um or more.

12. An emulsion, obtained by dispersion and emulsion polymerization of a monomer in a solvent, and subsequent termination of a reaction with a reaction terminator having an aromatic ring and having a particle diameter (d50) of 200 um or less.

13. The emulsion according to claim 12, wherein Mw of a polymer in the emulsion is 100000 to 1000000.

14. The emulsion according to claim 12 or 13, wherein the particle diameter (d50) of the reaction terminator is 10 um or more.

15. A method for terminating emulsion polymerization, wherein, after emulsion polymerization of a monomer that is performed in the presence of a solvent and an emulsifier, a reaction terminator having an aromatic ring and having a particle diameter (d50) of 200 um or less is added.
